# EUROPEAN PATENT SPECIFICATION

(11) **EP 2 391 226 B1**
(45) Date of publication and mention of the grant of the patent: **21.11.2012**
(21) Application number: 10701368.2
(22) Date of filing: 28.01.2010
(51) Int. Cl.: A23K 1/17, A23K 1/00

(54) **PROCESS FOR THE PREPARATION OF COLISTIN MEDICATED FEEDS AND FEEDS OBTAINABLE BY SAID PROCESS**
VERFAHREN ZUR HERSTELLUNG VON MIT COLISTIN VERSETZTEN ARZNEIMITTELHALTIGEN FUTTERMITTELN, UND NACH DIESEM VERFAHREN ERHÄLTLICHE FUTTERMITTEL
PROCÉDÉ DE PRÉPARATION D'ALIMENTS MÉDICAMENTEUX À BASE DE COLISTINE ET ALIMENTS POUVANT ÊTRE OBTENUS PAR LEDIT PROCÉDÉ

(30) Priority: 30.01.2009 EP 09382013
(43) Date of publication of application: 07.12.2011
(73) Proprietor: Andersen S.A., 08191 Rubí Barcelona (ES)
(72) Inventor: NÚÑEZ DE PRADO I ESGARRA, Mireia, E-08191 Rubí (Barcelona) (ES); BALLBÉ HERNÁNDEZ-BAENA, Anna, E-08191 Rubí (Barcelona) (ES); ROCAMORA, Emilio, E-08191 Rubí (Barcelona) (ES); SUÑÉ NEGRE, José María, E-08028 Barcelona (ES)
(74) Representative: ZBM Patents
(86) International application number: PCT/EP2010/050951
(87) International publication number: WO 2010/086339

(56) References cited:
- EP-A- 1 238 673
- EP-A- 1 584 243
- WO-A-96/00506
- DATABASE WPI Week 197950 Thomson Scientific, London, GB; AN 1979-90502B XP002524271 & JP 48 077014 A (KYOWA HAKKO KOGYO KK) 17 October 1973 (1973-10-17)
- DATABASE WPI Week 200203 Thomson Scientific, London, GB; AN 2002-021634 XP002524272 & JP 2001 278806 A (KAKEN PHARM CO LTD) 10 October 2001 (2001-10-10)

## Description

### FIELD OF THE INVENTION

The present invention relates to a process for the preparation of colistin medicated feeds for animal feeding and to the feeds obtainable by said method.

### BACKGROUND ART

In accordance with the monograph 02749 of The Merck Index, XIV Ed., colistin is an oligopeptidic antibiotic obtained by fermentation consisting of a complex mixture of at least 30 components, mainly colistin A and colistin B.

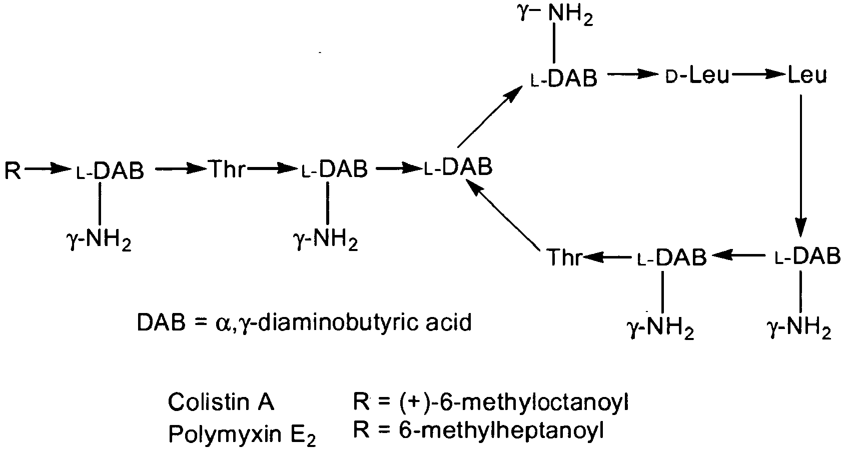

Colistin is used in the form of its addition salts with acids, mainly as sulfate, and also in the form of a sodium methanesulfonate derivative (colimycin).

This antibiotic is used as antibiotic for animals and it is usually administered by medicated feeds containing it. Furthermore, it is authorized in some countries, such as for example Japan, for its use as an additive for animal feeding. British patent application GB-A-1284865, published in 1972, discloses for the first time animal feeds containing colistin or addition salts thereof (sulfate or phosphate) for promoting the development and growth of animals, and the use of colistin and salts thereof as additives for feeds.

Said British patent application teaches that, although colistin can be directly mixed with the finished feed, in order to ensure a homogeneous dispersion thereof in the feed it is preferable to previously prepare a premixture of colistin (premix) with a suitable inert vehicle, and adding said premixture as a further component of the feed before it is finished. Among the suitable inert vehicles lactose, sugar, starch, calcium carbonate, kaolin, and calcium phosphate are cited.

Subsequently, the state of the art has centred on the design and use of additives and premixtures containing colistin for its incorporation in feeds during their manufacture, the main problem posed being that of improving the stability of colistin in the feeds, which is mainly affected by the degradation of colistin which may occur during the manufacturing process of the feed, requiring in its final stages (granulation and pelletization) the use of high temperatures and degrees of humidity.

Thus, Japanese patent application JP-A-57042635 (1982) discloses a desiccated premixture of colistin with vegetable fibres, with a determined particle size, which is stable after its mixing with the feed. Japanese patent application JP-A-57155954 (1982) discloses the addition of colistin to feeds together with an aliphatic amine which improves its stability. Japanese patent application JP-A-5003759 (1993) discloses the use as additive for feeds of colistin coated by a protective agent, such as gelatine, cellulose or polyvinyl alcohol, which improves its stability. Japanese patent application JP-A-5168421 (1993) discloses a stable premixture of colistin, for its use in feeds, which contains chaff of previously treated cereals or diatomaceous earth. Japanese patent application JP-A-6189691 (1994) discloses a powder premixture of colistin stable in pelletized feeds consisting of a mixture of colistin sulfate with starch, which is then gelatinized and solidified by heating to obtain uniform particles. Patent application PCT WO-A-96/00506 (1996) discloses stabilized compositions of colistin sulfate in granular form which comprises a dispersion of microparticles of colistin sulfate and microparticles of beta-starch and/or soy flour; the compositions are used as a component of the feed and resist the manufacturing conditions of the feed. European patent application EP-A1238673 discloses granules of colistin sulfate having certain functional characteristics and particle size which are suitable for mixing with the feeds and are resistant to degradation; they also disclose additives and premixtures which contain said granules. European patent application EP-A-1584243 (2005) again considers the problem of the degradation of active ingredients, particularly colistin; during the manufacturing of the feed, and colistin granules are proposed (example 8) which are embedded in a solidified hydrogenated vegetable oil.

Comments on the aforementioned Japanese patent applications have been extracted from the corresponding references of the ESPACENET database, of the European Patent Office, accessible in Internet, containing summaries in English.

Thus, the problem of achieving a process which makes it possible to incorporate colistin or salts and derivatives thereof in a granular or pelletized finished feed so that the colistin is homogenously distributed in said finished feed, thus avoiding the drastic feed manufacturing conditions, without significantly segregating during its processing and transport, thus guaranteeing a correcting dosing of the colistin to the animals, remains unresolved.

The solution to this problem would further allow medicating at will feeds already finished just before their loading in the transport vehicle, which would decrease the risk of cross contaminations.

### SUMMARY OF THE INVENTION

The object of the invention is a process for the preparation colistin medicated feeds wherein colistin, salts or derivatives thereof are homogeneously and stably dosed on the surface of the finished feed.

Colistin medicated feeds obtainable by said method also form part of the object of the invention.

The process object of the invention comprises:
(a)spraying on a granular or pelletized feed, under stirring, a solution of an adherent agent in a solvent, and
(b)spraying simultaneously or subsequently a solution of colistin, salts or derivatives thereof, in a solvent.

The colistin, salts and derivatives thereof are commercially available in different forms, for example in the form of its powder salts and as pharmaceutical preparations such as solid and liquid premixtures with different components. Any of said forms can be used in the method object of the invention.

Preferably, colistin is used in the form of sulfate, which is soluble in water. The use of an oily suspension of colistin sulfate is also preferred.

An oily suspension of colistin sulfate is, for example, the commercial product NIPOXYME^{®} oral suspension 200 milligrams/gram, marketed by Laboratorios Andersen, S.A. (Spain), which contains a quantity of colistin sulfate equivalent to 20% by weight of colistin base relative to the total weight of the suspension.

As a variant of the process, the oily suspension of colistin sulfate can be directly sprayed on the feed, although it is preferable to spray it previously diluted in an aqueous solvent, preferably water.

When colistin sulfate or said oily suspension of colistin sulfate is used as solvent for the solution of the active ingredient to be sprayed, water or mixtures of water with water-miscible polar solvents are preferred, such as, for example, short chain alcohols, such as methanol or ethanol, or glycols, such as, for example ethylene glycol. The preferred solvent is water.

Colistin sulfate concentration (expressed as colistin base) in said solution is not critical, and it preferably can vary from 0.1 to 15% by weight, more preferably from 1 to 10% by weight, still more preferably from 5 to 8% by weight.

The adherent agent is a physiologically acceptable additive capable of establishing forces of cohesion between the colistin and the surface of the feed, said agent being preferably selected from sodium lignosulfonate, polyvinylpirrolidone, ethyl methacrylic/acrylate copolymers of Eudragit type, sorbitol, poloxamers, carbopol, hydroxypropyl methyl cellulose and polyethylene glycol.

The sodium salt of by-products of the manufacturing of wood pulp which are anionic type water soluble sulfonated polymeric derivatives is known as sodium lignosulfonate. Sodium lignosulfonate is commercialy avaible very easily.

Polyvinylpirrolidone or povidone is a known pharmaceutical excipient with binding activity. For the purposes of the present invention the commercial povidones Plasdone K90 and Plasdone-S630 are preferred.

Among the methacrylic/ethyl acrylate copolymers of Eudragit type Eudragit L30 D-55 is preferred.

Concentrated aqueous solutions of sorbitol, for example, 70% liquid sorbitol, are also appropriate adherent agents for the purposes of the present invention.

Different binders of pharmaceutical use are also useful as adherent agents, such as poloxamers, for example, poloxamer 407, carbopols, such as carbopol 940, hydroxypropyl methyl cellulose, for example, Pharmacoat 606, carboxymethylcellulose and polyethylene glycol of relatively low molecular weight, for example PEG 600, as well as binders of natural origin such as various types of gums and mucilages such as xanthan gum, tragacanth gum, acacia gum, mucilage of gelatine and starch paste.

The adherent agents capable of forming limpid aqueous solutions with not very high viscosity at proportions of at least 5% by weight, preferably of at least 10% by weight, are preferred.

Especially preferred as adherent agents are sodium lignosulfonate, polyvinylpirrolidone of Plasdone S630 type and 70% liquid sorbitol.

Due to its excellent adherent properties, its low cost and its accessibility, for the purposes of the present invention the most preferred adherent agent is sodium lignosulfonate.

As solvent for the solution of adherent agent to be sprayed, water or mixtures of water with water-miscible polar solvents are preferred, such as, for example, short chain alcohols, such as methanol or ethanol, or glycols, such as, for example, ethylene glycol. The preferred solvent is water.

Neither is the concentration of adherent agent in said solution critical, and it can preferably vary from 0.1 to 15% by weight, more preferably from 1 to 10% by weight.

The proportion by weight of the adherent agent relative to the colistin or its salts can be from 0.1:1 to 20:1, preferably from 0.5:1 to 10:1, more preferably from 0.5:1 to 5:1.

Spraying of the solutions of colistin and adherent agent on the granular or pelletized feed can be carried out simultaneously or sequentially, although when the spraying is sequential in first place the solution of adherent agent is sprayed and then the colistin solution.

Spraying is carried out on the mass of feed subjected to a sufficient stirring so that the adherent agent and the colistin are homogeneously deposited on the surface of the granules or pellets that compose the feed. Conventional mixers provided with spraying nozzles can be used. Spraying can also be carried out in conduction systems of the finished feed provided with an endless screw producing a sufficient stirring, for example during the conduction of the finished feed to the storage silo or directly to the transport vehicle.

Neither is the temperature during the spraying and mixing process critical, although room temperature of between 15° and 35° C is preferred.

It is convenient that the spraying and mixing operation is not excessively prolonged over time and that the medicated feed does not suffer later violent stirring processes, since an excess of stirring and friction may negatively affect the homogeneity of the distribution of the colistin due to the detachment of the colistin adhered to the surface of the feed.

For the person skilled in the art it is a matter of mere routine to establish in each case the intensity and stirring time, bearing in mind the nature of the feed, the type of adherent agent, and the quantity of colistin dosed. Nevertheless, in general, good results are obtained when, once the spraying of the solutions has finalized, stirring is maintained for a maximum time of 10 minutes, preferably 5 minutes.

The quantity of colistin dosed in the feed is in accordance with the needs of the livestock farming industry for each case considered. For example, typically colistin medicated feeds usually contain around 125 mg of colistin per each Kg of feed, although cases may occur of appreciably higher doses. The process object of the invention makes it possible to obtain feeds with a wide range of colistin concentrations.

Colistin medicated feeds for animal feeding thus obtained are characterized in that they comprise a granular or pelletized feed containing adhered on its surface a mixture of:
(a)colistin, salts or derivatives, thereof and
(b)an adherent agent,
so that colistin is distributed on the surface of the feed in a substantially homogeneous way.

Here, the definitions of colistin and adherent agent previously made on describing the process object of the invention are applicable, as are the preferences mentioned on describing said method.

It is considered that colistin is homogeneously distributed on the surface of the feed when the variation in the colistin content in different zones of the feed is comprised in a range of ± 15% by weight relative to the dosed theoretical weight. Thus, if the dosage corresponds to 125 mg of colistin sulfate (expressed as colistin base) per Kg of feed, the variations in content depending on the areas can oscillate between 106.3 mg (-15%) and 143.7 mg (+ 15%) per Kg of feed.

Feeds produced by the claimed process have the advantage that colistin has not been subjected to the energetic conditions of temperature and humidity typical of feed granulation or pelletization, thus avoiding degradations and improving stability. Furthermore, against that previously stated in the state of the art, the process object of the invention allows obtaining a homogeneous distribution of colistin in the finished feed, offering guarantees that the dosage of the colistin to the animals will be correct.

This enables medicating at will feeds that are already finished just before their loading in the transport vehicle, which decreases the risk of cross contaminations.

An especially preferred embodiment of the process object of the invention comprises the following stages:
(a)spraying on a granular or pelletized feed, under stirring and at room temperature, a 1% by weight aqueous solution of sodium lignosulfonate, and
(b)subsequently spraying a 6.25% by weight aqueous solution of colistin sulfate (expressed as colistin base),
so that the proportion by weight of colistin relative to the feed is of 125 ± 10 mg/Kg and that the proportion by weight of sodium lignosulfonate relative to colistin is from 0.5:1 to 3:1, preferably from 0.5:1 to 1:1.

Another especially preferred embodiment of the process of the invention comprises simultaneously spraying on a granular or pelletized feed, under stirring and at room temperature,
(a)a 5% by weight aqueous solution of sodium lignosulfonate, and
(b)a 6.25% by weight aqueous solution of an oily suspension of colistin sulfate containing a quantity of colistin sulfate equivalent to 20% by weight of colistin base relative to the total weight of the suspension,
so that the proportion by weight of colistin relative to the feed is of 125 ± 10 mg/Kg and that the proportion by weight of sodium lignosulfonate relative to the colistin is from 1:1 to 3:1, preferably from 1.5:1 to 2.5:1.

The oily suspension of colistin sulfate is, for example, the commercial product NIPOXYME^{®} oral suspension 200 milligrams colistin base/gram, defined above.

Various more specific embodiments within the present invention and the results obtained therewith are stated below in the form of examples.

### EXAMPLES

### Example 1

In a sigma TURU double mixer, 1.2 kg of a white granulated feed for feeding piglets, the feed being structured in the form of pellets with a thickness of approximately 2-3 mm and a length of approximately 10-15 cm, were added.

10 ml of a 1% by weight aqueous solution of sodium lignosulfonate were sprayed on the feed, under stirring, during approximately 3 minutes, .

Once the spraying of the sodium lignosulfonate was completed, 2.4 ml of a 6.25% aqueous solution of colistin sulfate (expressed as colistin base) were added also under stirring. Stirring was continued for 5 additional minutes, after which the colistin medicated feed was unloaded from the mixer.

Once unloaded, the feed had a homogeneous appearance, not being agglomerated or comminuted and, once analysed by the method indicated below, it showed a colistin content of 121 mg/kg, the theoretical being 125 mg/Kg. Therefore, the efficiency of the process was close to 97%.

The colistin sulfate content of the feed obtained is determined by conventional methods well known in the pharmaceutical industry and in the animal feeding industry. The method used was based on the determination of colistin in feeds by the HPLC-Fluorescence method with post-column derivatization, using as reference standard colistin sulfate from Meji Seika Kaisha, Ltd. with a colistin richness of A(E1)+B(E2) of 79.2%.

### Examples 2 to 6

In the same way and with the same equipment used in example 1, other colistin medicated feeds with the method variations stated in table 1 below were prepared.

In examples 2-6 the same quantity of the same feed, 1.2 Kg, and the same quantity of 6.25% by weight aqueous solution of colistin sulfate, 2.4 ml, were used. Variations introduced were only in the solution of adherent agent used.

**Table 1**

| Example | Adherent solution | Colistin content of the finished feed (Efficiency) |
|---|---|---|
| 2 | 10 ml of a 3% by weight aqueous solution of sodium lignosulfonate | 102 mg/Kg (81.6%) |
| 3 | 10 ml of a 10% aqueous solution of Plasdone K-90 | 101 mg/Kg (80.8%) |
| 4 | 10 ml of a 10% aqueous solution of Plasdone S-630 | 119 mg/Kg (95.2%) |
| 5 | 10 ml of a 10% aqueous solution of Eudragit L30 D-55 | 100 mg/Kg (80%) |
| 6 | 10 ml of a 10% aqueous solution of 70% liquid Sorbitol | 111 mg/Kg (88.8%) |

Plasdone K-90 and Plasdone S-630 are commercial references of polyvinylpirrolidone. Eudragit L30 D-55 is a commercial reference of an methacrylic/ethyl acrylate copolymer.

All the feeds obtained in examples 2 to 6 had a homogeneous appearance and were not caked or comminuted. In all cases incorporation of colistin to the feed was sufficiently acceptable, although in this aspect the good results obtained in the feeds of examples 4 and 6 are emphasized.

### Example 7

In a sigma TURU double mixer, 1.2 kg of the same feed used in example 1 were added, and 5 ml of a 5% by weight aqueous solution of sodium lignosulfonate and 10 ml of a 6.25% aqueous solution of NIPOXYME^{®} oral suspension 200 milligrams of colistin base/gram were simultaneously sprayed on the feed, throughout approximately 3-5 minutes and under stirring.

Once the simultaneous spraying of both solutions was completed, stirring was continued for 3-5 additional minutes, after which the colistin medicated feed was unloaded from the mixer.

Once unloaded, the feed had a homogeneous appearance, not being agglomerated or comminuted and, once analysed by the method indicated in example 1, showed a colistin content of 120 mg/kg, the theoretical being 125 mg/Kg. Therefore, the efficiency of the process was 96%.

### Example 8

Example 7 was reproduced, but instead of 10 ml of a 6.25% aqueous solution of NIPOXYME^{®} 200 oral suspension, 5 ml of a 12.5% aqueous solution of NIPOXYME^{®} oral suspension 200 milligrams of colistin base/gram were sprayed.

A colistin medicated feed was obtained which was homogeneous, not agglomerated or comminuted, and which had a colistin content of 113 mg/Kg (90.5% efficiency).

### Example 9

Example 8 was reproduced, but instead of 5 ml of a 5% by weight aqueous solution of sodium lignosulfonate, 5 ml of a 10% by weight aqueous solution of the polyvinylpirrolidone Plasdone S-630 were sprayed as adherent solution.

A colistin medicated feed was obtained which was homogeneous, not agglomerated or comminuted, and which had a colistin content of 109 mg/Kg (87.2% efficiency).

### Example 10

Example 7 was reproduced, but instead of 5 ml of a 5% by weight aqueous solution of sodium lignosulfonate, as adherent solution, 5 ml of a 10% by weight aqueous solution of the polyvinylpirrolidone Plasdone S-630 were sprayed.

A colistin medicated feed was obtained which was homogeneous, not agglomerated or comminuted, and which had a colistin content of 128 mg/Kg (102.4% efficiency).

### Example 11

This example describes a test which allows verifying that by the process object of the invention colistin is distributed in the granular or pelletized feed in a substantially homogeneous way.

Before unloading the colistin medicated feed from the mixer, three random samples of each one of the two medicated feeds prepared in examples 7 and 10 (from the left of the mixer, from the centre and from the right) were taken and in each one of the samples the colistin content in accordance with the method indicated in example 1 was analysed in triplicate. The results are shown in the following table 2.

**Table 2**

| **Sample** | Analysis 1 (mg/Kg) | Analysis 2 (mg/Kg) | Analysis 3 (mg/Kg) |
|---|---|---|---|
| Example 7 - Right | 123 | 125 | 127 |
| Example 7 - Centre | 116 | 117 | 119 |
| Example 7 - Left | 120 | 117 | 119 |
| Example 10 - Right | 127 | 123 | 123 |
| Example 10 - Centre | 119 | 119 | 119 |
| Example 10 - Left | 123 | 129 | 123 |

As is observed, the values of the samples taken in different areas were within the acceptable ranges of variation of ±10% by weight relative to the dosed theoretical weight. For the dosing of 125 mg of colistin base per Kg of feed, between 112.5 mg (-10%) and 137.5 mg (+ 10%) per Kg of feed.

Thus, the method object of the invention allows obtaining colistin medicated feeds wherein the distribution of the active ingredient is sufficiently homogeneous, despite the colistin having being dosed on the finished granular or pelletized feed.

## Claims

1. A process for the preparation of colistin medicated feeds, the process comprising:
(a) spraying on a granular or pelletized feed, under stirring, a solution of an adherent agent in a solvent, and
(b) spraying simultaneously or subsequently a solution of colistin, salts or derivatives thereof, in a solvent.

2. The process according to claim 1, wherein colistin is used in form of sulfate.

3. The process according to claim 2, wherein an oily suspension of colistin sulfate is used.

4. The process according to claims 2 or 3, wherein water or mixtures of water with water-miscible polar solvents are used as solvent for the colistin solution.

5. The process according to claims 2 or 3, wherein the concentration of colistin sulfate, expressed as colistin base in the solution to be sprayed is from 0.1 % to 15% by weight.

6. The process according to claim 5, wherein the adherent agent is selected from sodium lignosulfonate, polyvinylpirrolidone, methacrylic/ethyl acrylate copolymer of the Eudragit® type, 70% liquid sorbitol.

7. The process according to claim 6, wherein the adherent agent is sodium lignosulfonate.

8. The process according to any one of the preceding claims, wherein the proportion by weight of the adherent agent relative to the colistin or salts thereof is from 0.1:1 to 20:1.

9. The process according to claim 1, wherein the spraying of step a) is carried out at room temperature, using a 1 % by weight aqueous solution of sodium lignosulfonate, and wherein subsequently the spraying of step b) is carried out using a 6.25% by weight aqueous solution of colistin sulfate, expressed as colistin base, so that the proportion by weight of colistin relative to the feed is 125 ± 10 mg/Kg and that the proportion by weight of sodium lignosulfonate relative to the colistin is from 0.5:1 to 3:1.

10. The process according to claim 1, wherein is simultaneously sprayed at room temperature,
(a) a 5% by weight aqueous solution of sodium lignosulfonate, and
(b) a 6.25% by weight aqueous solution of an oily suspension of colistin sulfate which contains a quantity of colistin sulfate equivalent to 20% by weight of colistin base relative to the total weight of the suspension, so that the proportion by weight of colistin relative to the feed is of 125 ± 10 mg/Kg and that the proportion by weight of sodium lignosulfonate relative to the colistin is from 1:1 to 3:1.

11. A colistin medicated feed obtainable by a process according to any one of claims 1 to 10.

12. A colistin medicated feed for animal feeding **characterized in that** it comprises a granular or pelletized feed which contains adhered to its surface a mixture of colistin, salts or derivatives thereof and an adherent agent, so that colistin is distributed on the surface of the feed in a substantially homogeneous way.

13. The feed according to claim 12, wherein colistin is in the form of sulfate.

14. The feed according to claim 12, wherein the adherent agent is sodium lignosulfonate.

15. The feed according to claims 12 to 14, wherein variation in the colistin content in different areas of the feed is comprised in a range of ± 15% by weight relative to the dosed theoretical weight.

## Patentansprüche

1. Verfahren zur Herstellung von Colistin-Fütterungsarzneimitteln, wobei das Verfahren die folgenden Schritte umfasst:
(a) Besprühen, unter Rühren, einer in einem Lösungsmittel enthaltenen Haftmittellösung ein granulares oder pelletiertes Futtermittel, und
(b) Gleichzeitiges oder nachträgliches Besprühen einer in einem Lösungsmittel enthaltenen Colistin-Lösung, Salze oder Derivate davon.

2. Verfahren nach Anspruch 1, wobei das Colistin als Sulfat verwendet wird.

3. Verfahren nach Anspruch 2, wobei eine Ölsuspension von Colistinsulfat verwendet wird.

4. Verfahren nach einem der Ansprüche 2 oder 3, wobei Wasser oder Mischungen aus Wasser mit wassermischbaren polaren Lösungsmitteln als Lösungsmittel für die Colistin-Lösung verwendet werden.

5. Verfahren nach einem der Ansprüche 2 oder 3, wobei die Colistinsulfat-Konzentration, ausgedrückt als Colistin Base in der zu besprühenden Lösung, von 0,1 bis 15 Gew.-% ist.

6. Verfahren nach Anspruch 5, wobei das Haftmittel aus Natriumligninsulfonat, Polyvinylpirrolidon, Copolymer aus Methacrylsäure und Ethylacrylat der Eudragit®-Art und 70%-igem flüssigem Sorbitol ausgewählt wird.

7. Verfahren nach Anspruch 6, wobei das Haftmittel Natriumligninsulfonat ist.

8. Verfahren nach einem der vorhergehenden Ansprüche, wobei das Gewichtsverhältnis des Haftmittels zum Colistin bzw. dessen Salzen von 0,1:1 bis 20:1 ist.

9. Verfahren nach Anspruch 1, wobei das Besprühen vom Schritt a) bei Raumtemperatur und unter Verwendung von einer 1%igen (Gew.-%) wässrigen Lösung von Natriumligninsulfonat ausgeführt wird, und wobei das nachträgliche Besprühen vom Schritt b) unter Verwendung von einer 6,25%igen (Gew.-%) wässrigen Lösung von Colistinsulfat, ausgedrückt als Colistin Base, ausgeführt wird, sodass das Gewichtsverhältnis des Colistins zum Futtermittel 125 ± 10 mg/Kg ist und das Gewichtsverhältnis des Natriumligninsulfonats zum Colistin von 0,5:1 bis 3:1 ist.

10. Verfahren nach Anspruch 1, wobei man gleichzeitig bei Raumtemperatur folgendes besprüht:
(a) eine 5%ige (Gew.-%) wässrige Lösung von Natriumligninsulfonat, und
(b) eine 6,25%ige (Gew.-%) wässrige Lösung einer Ölsuspension von Colistinsulfat enthaltend einen Gehalt von Colistinsulfat, entsprehend der 20 Gew.-% der Colistin Base bezüglich des Gesamtgewichts der Suspension ausmacht, sodass das Gewichtsverhältnis des Colistins zum Futtermittel 125 ± 10 mg/Kg ist und das Gewichtsverhältnis des Natriumligninsulfonats zum Colistin von 1:1 bis 3:1 ist.

11. Colistin-Fütterungsarzneimittel herstellbar nach einem Verfahren nach einem der Ansprüche 1 bis 10.

12. Colistin-Fütterungsarzneimittel für Tierfütterung **dadurch gekennzeichnet, dass** es ein granulares oder pelletiertes Futtermittel umfasst, das angehaftet an dessen Oberfläche eine Mischung aus Colistin, Salzen oder Derivaten davon und einem Haftmittel hat, sodass das Colistin auf der Oberfläche des Futtermittels wesentlich homogen verteilt ist.

13. Futtermittel nach Anspruch 12, wobei das Colistin als Sulfat vorhanden ist.

14. Futtermittel nach Anspruch 12, wobei das Haftmittel Natriumligninsulfonat ist.

15. Futtermittel nach einem der Ansprüche 12 bis 14, wobei die Abweichung des Colistingehalts in den verschiedenen Teilen des Futtermittels im Bereich von ± 15 Gew.-% bezogen auf das theoretische dosierte Gewicht liegt.

## Revendications

1. Procédé pour la préparation d'aliments médicamenteux contenant de la colistine comprenant les étapes suivantes:
(a) asperger, sous agitation, une solution d'un agent adhérent contenue dans un dissolvant sur un aliment sous la forme de granules ou de pellets, et
(b) asperger simultanément ou par la suite une solution de colistine, ses sels ou ses dérivés, contenue dans un dissolvant.

2. Procédé selon la revendication 1, dans lequel la colistine est utilisée sous la forme d'un sulfate.

3. Procédé selon la revendication 2, dans lequel on utilise une suspension huileuse de sulfate de colistine.

4. Procédé selon l'une quelconque des revendications 2 ou 3, dans lequel on utilise de l'eau ou des mélanges de l'eau avec des solvants polaires miscibles à l'eau en tant que solvant pour la solution de colistine.

5. Procédé selon l'une quelconque des revendications 2 ou 3, dans lequel la concentration de sulfate de colistine, exprimée sous forme de poids de base de colistine dans la solution à asperger est de 0,1% à 15%.

6. Procédé selon la revendication 5, dans lequel l'agent adhérent est choisi parmi le lignosulfonate de sodium, la polyvinylpyrrolidone, du copolymère méthacrylique/éthylacrylate du type Eudragit® et du sorbitol sous forme liquide à 70%.

7. Procédé selon la revendication 6, dans lequel l'agent adhérent est le lignosulfonate de sodium.

8. Procédé selon l'une quelconque des revendications précédentes, dans lequel le rapport en poids de l'agent adhérent à la colistine ou aux sels de celle-ci est de 0,1:1 à 20:1.

9. Procédé selon la revendication 1, dans lequel l'aspersion correspondante à l'étape a) est effectuée à température ambiante en utilisant une solution aqueuse à 1% en poids de lignosulfonate de sodium, et dans lequel l'aspersion ultérieure correspondante à l'étape b) est effectuée en utilisant une solution aqueuse à 6,25% en poids de sulfate de colistine, exprimée sous forme de poids de base de colistine, de façon à ce que le rapport en poids de la colistine à l'aliment soit 125 ± 10 mg/Kg et que le rapport en poids du lignosulfonate de sodium à la colistine soit de 0,5 :1 à 3 :1.

10. Procédé selon la revendication 1, dans lequel on asperge simultanément à température ambiante:
(a) une solution aqueuse à 5% en poids de lignosulfonate de sodium, et
(b) une solution aqueuse à 6,25% en poids d'une suspension huileuse de sulfate de colistine contenant une quantité de sulfate de colistine équivalente au 20% en poids de base de colistine par rapport au poids total de la suspension, de façon à ce que le rapport en poids de la colistine à l'aliment soit de 125 ± 10 mg/Kg et que le rapport en poids du lignosulfonate de sodium à la colistine soit de 1 :1 à 3 :1.

11. Aliment médicamenteux contenant de la colistine pouvant être obtenu par un procédé selon l'une quelconque des revendications 1 à 10.

12. Aliment médicamenteux contenant de la colistine pour l'alimentation animale **caractérisé en ce qu'**il comprend un aliment sous forme de granules ou de pellets contenant adhéré à sa surface un mélange de colistine, ses sels ou ses dérivés, et un agent adhérent, de façon à ce que la colistine soit distribuée sur la surface de l'aliment de façon substantiellement homogène.

13. Aliment selon la revendication 12, dans lequel la colistine est sous forme de sulfate.

14. Aliment selon la revendication 12, dans lequel l'agent adhérent est le lignosulfonate de sodium.

15. Aliment selon l'une quelconque des revendications 12 à 14, dans lequel la variation dans la teneur en colistine dans les différentes régions de l'aliment est comprise dans le domaine de ± 15% en poids par rapport au poids théorique dosé.
